Europäisches Patentamt

(19) European Patent Office

Office européen des brevets

(11) Numéro de publication: **0 208 568**
**B1**

(12) # FASCICULE DE BREVET EUROPÉEN

(45) Date de publication du fascicule du brevet: 02.08.89

(51) Int. Cl.⁴: **B 23 P 15/00,** F 16 D 3/20

(21) Numéro de dépôt: 86401156.4

(22) Date de dépôt: 30.05.86

(54) **Procédé de fabrication d'un élément composite de joint homocinétique tripode.**

(30) Priorité: 12.06.85 FR 8508871

(43) Date de publication de la demande:
14.01.87 Bulletin 87/3

(45) Mention de la délivrance du brevet:
02.08.89 Bulletin 89/31

(84) Etats contractants désignés:
DE GB IT

(56) Documents cité:
EP-A-0 058 465
FR-A-521 562
FR-A-2 169 450
FR-A-2 502 270
GB-A-2 091 381
GB-A-2 137 540

(73) Titulaire: **REGIE NATIONALE DES USINES RENAULT,** Boîte postale 103 8-10 avenue Emile Zola, F-92109 Boulogne- Billancourt (FR)

(72) Inventeur: **Hernert, Jacques,** Ruelle des Princes, F-95440 Ecouen (FR)
Inventeur: **Klein, Patrice,** 24, rue de Clamart, F-92100 Boulogne Billancourt (FR)

(74) Mandataire: **Ernst- Schonberg, Michel, REGIE NATIONALE DES USINES RENAULT (S. 0804),** F-92109 Boulogne Billancourt Cedex (FR)

## Description

L'invention concerne un procédé de fabrication d'un élément composite de joint homocinétique tripode constitué par un fourreau à rampes de coulissement des galets d'un tripode, qui est assemblé à un fond susceptible d'être solidarisé avec une douille de réception d'un arbre menant et dont l'extrémité ouverte porte un capot de retenue d'un soufflet d'étanchéité.

Un tel élément de joint homocinétique est connu par la publication FR-A-2 502 270.

L'invention a pour objet un procédé d'usinage et d'assemblage des constituants de l'élément de joint homocinétique destiné à la production en grande série.

La publication EP-A-0 058 465 décrit un procédé de fabrication par formage à froid d'un fourreau à rampes de coulissement d'un tripode à partir d'un tronçon de barre tubulaire, suivant lequel on procède principalement à l'usinage de l'entrée conique des rampes, suivi par un brochage en deux phases et poursuivi par un autre usinage de l'entrée conique des rampes au contact de la face opposée du fourreau avant de procéder au traitement thermique précèdant l'assemblage du joint.

Les déformations locales du fourreau, consécutives au traitement thermique, affectent la géométrie du joint et nécessitent un rodage en cours de fonctionnement de celui-ci.

L'invention a donc pour objet un procédé d'usinage dans lequel les déformations locales du fourreau subissent une correction avant l'assemblage du joint.

Un autre objet de l'invention est une installation d'usinage et d'assemblage d'un tel élément de joint homocinétique comportant un minimum de postes d'usinage.

L'invention est definie pour la revendication 1.

Le procédé sera bien mieux compris à la lecture de la description donnée à titre d'exemple en référence au dessin joint sur lequel:

- la figure 1 est une coupe axiale du joint de transmission homocinétique assemblé;
- la figure 2 est une vue en perspective éclatée des éléments constitutifs de l'élément cmposite de joint homocinétique;
- la figure 3 est une représentation schématique du procédé de fabrication du fourreau à rampes de coulissement;
- la figure 4 est une représentation schématique du procédé d'assemblage du fourreau à rampes de coulissement aux autres constituants de l'élément de joint;
- la figure 5 est une représentation schématique de l'installation d'usinage et d'assemblage du fourreau et de l'élément de joint.

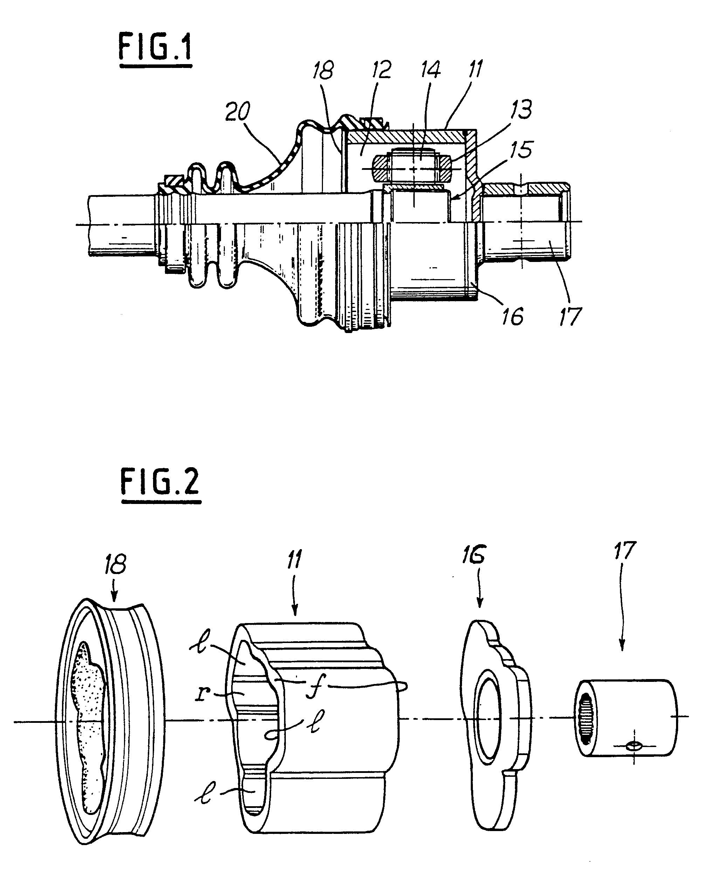

Selon l'exemple de réalisation du joint homocinétique représenté à la figure 1, un fourreau 11 obtenu par formage et de forme générale à trois lobes délimite trois chemins de roulement constitués par des rampes "r" de roulement pour des galets 13 montés sur des tourillons 14 d'un tripode 15.

Le fourreau 11 est obturé par un fond 16 sur lequel est rapporté un moyen de liaison tel qu'une douille 17 de réception d'un arbre cannelé menant ou une plaque de fixation à une bride d'assemblage ainsi que cela a été décrit par la publication FR-A-2 502 270 ou la demande de brevet 84.18871 intitulée dispositif de liaison d'un élément de joint homocinétique avec un arbre de sortie.

L'extrémité du fourreau 11 opposée au fond 16 porte un capot 18 cylindrique en tôle dont la face avant découpée en correspondance avec l'ouverture du fourreau 11 est soudée sur ledit fourreau. Il y a lieu de noter que le capot 18 peut coiffer le fourreau 11 ainsi que représenté à la figure 1 ou bien prolonger axialement ce dernier.

La capot 18 constitue le moyen de portée et de retenue du soufflet d'étanchéité 20 ainsi que cela est décrit dans la publication FR-A-2 502 270.

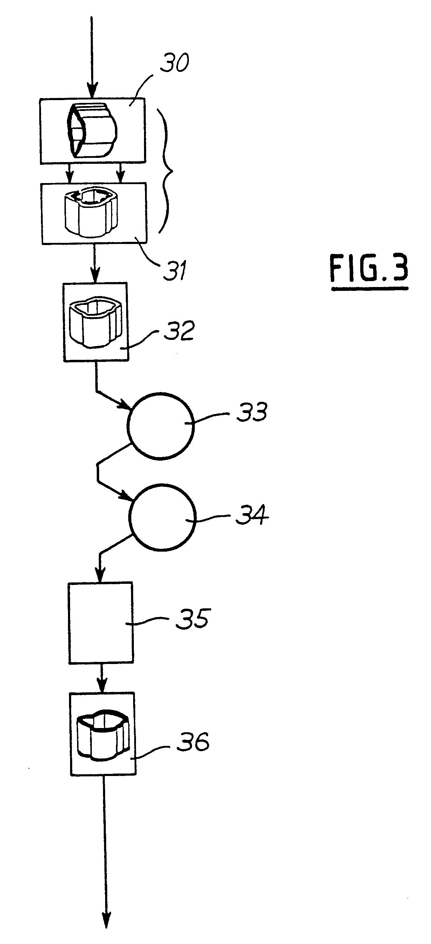

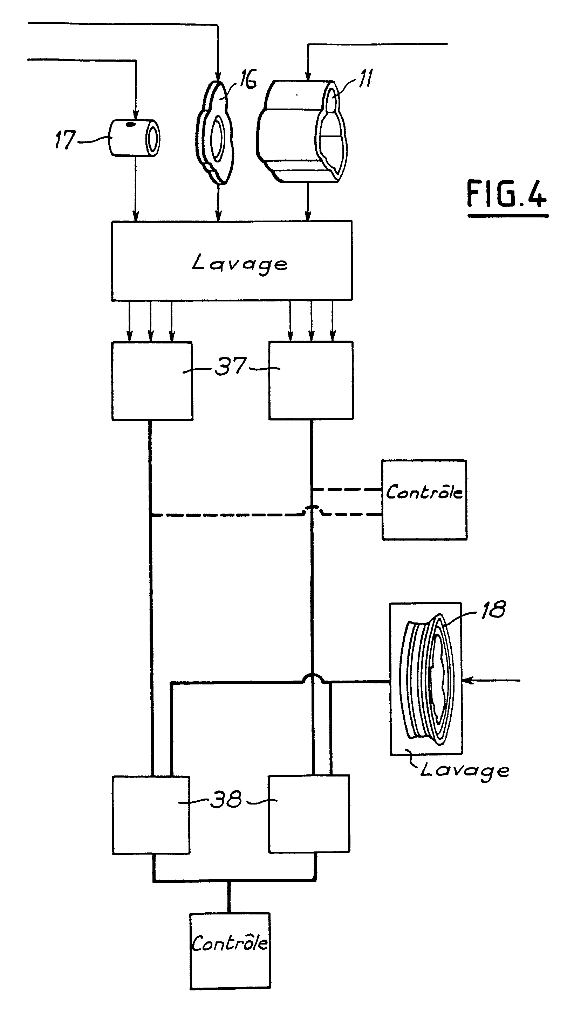

Nous décrirons successivement le procédé de fabrication du fourreau et l'assemblage de l'élément de transmission en référence des figures 3 à 5.

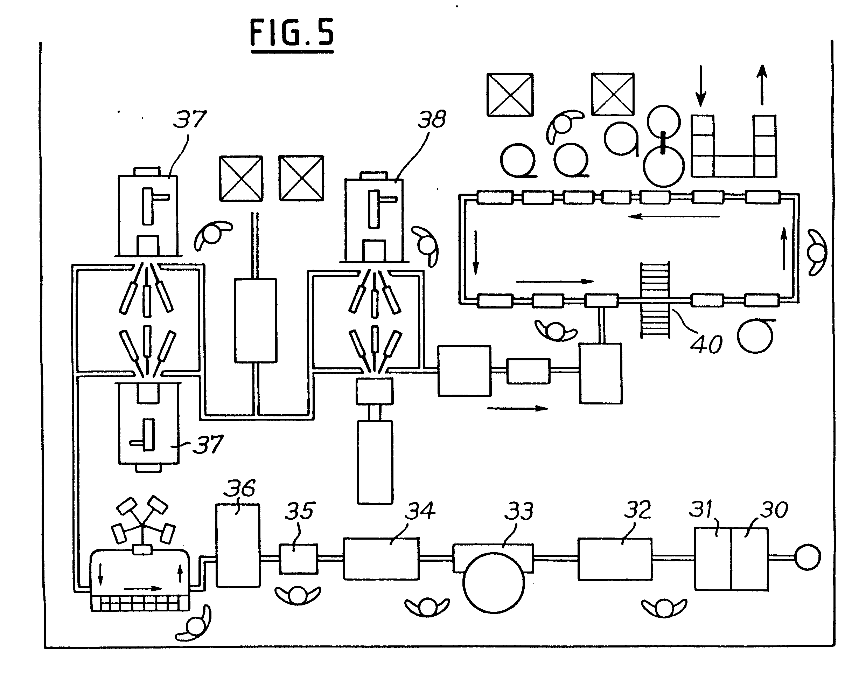

Ainsi que cela est montré à la figure 3 et 5, une barre tubulaire d'acier mi-dur et de configuration interne à trois lobes "l" est débitée en tronçons au cours d'une opération de sciage.

Les fourreaux 11 réalisés dans les tronçons correspondants sont amenés a une brocheuse 30 qui exécute simultanément sur deux fourreaux le brochage des faces "f" lorsque le fourreau est maintenu en position sur sa périphérie.

Les fourreaux sont ensuite retournés en vue de leur amenée à une brocheuse 31 qui exécute simultanément sur ces deux mêmes pièces le brochage vertical des rampes "r" et le diamètre intérieur. Cette opération peut être suivie par un contrôle d'équidistance des différentes rampes "r" par rapport à l'axe du fourreau et de la bonne perpendicularité de celles-ci par rapport à la face d'appui du fourreau au cours de l'opération. Le brochage précité assure une préparation du fourreau au traitement thermique ultérieur.

Les fourreaux 11 sont acheminés vers une machine de lavage 32 dont le jet les débarasse des copeaux et de l'huile de coupe.

Après séchage par air pulsé les fourreaux sont acheminés deux par deux vers une machine 33 sur laquelle les fourreaux en appui sur une face sont orientés par un gabarit en forme de tripode et sont bridés par la face supérieure. Les fourreaux sont alors portés par chauffage à induction à moyenne fréquence à une température voisine de 850° et sont soumis extérieurement à une douche destinée à limiter l'effet de trempe aux seules rampes "r" sur une profondeur de 1,5 à 2,5 mm et sur une longueur limitée à partir d'une certaine distance des faces f.

Cette trempe confère aux rampes une dûreté superficielle de 650 HV environ et une dûreté de 485 HV environ à la profondeur de 1,5 ou 2,5 mm.

Les fourreaux sont ensuite acheminés vers un poste de conformage 34 destiné à remettre en forme ceux-ci.

Le poste 34 travaille selon un processus particulier incluant:

- une première mesure de l'écartement $E_1$ des rampes de chaque lobe;

- la modification de la géométrie axiale du fourreau par emmanchement à force d'une bille de calibrage en carbure centrée dans le fourreau;

- une deuxième mesure de l'écartement $E_2$ des rampes de chaque lobe;

- l'emmanchement d'un tripode étalon à galets en carbure dont l'enfoncement dépend de la valeur $E_2 - E_1$.

Au sortir du poste 34, les fourreaux sont acheminés vers un poste de contrôle 35 sur lequel les pièces trempées dans un révélateur magnétique sont éclairées sous une lumière ultraviolette dans le but de révéler les criques éventuelles qui auraient pu se former au cours des opérations précédentes.

Puis les fourreaux sont de nouveau démagnétisés.

Enfin les fourreaux alimentent un poste de rectification 36 sur lequel une surfaceuse rectifie les faces latérales du fourreau préalablement maintenu et posé sur son profil extérieur.

A la suite des opérations d'usinage précitées les fourreaux 11 convergent vers les ensembles constitués par le fond 16 en acier doux et par un moyen de liaison illustré à titre d'exemple non limitatif par la douille 17 en acier mi-dur. Les collections ainsi constituées sont tout d'abord lavées et séchées avant de passer sur un poste de soudage 37.

Sur le poste les constituants 11, 16, 17 sont tout d'abord positionnés avant chargement par un bras manipulateur de la machine à souder.

La machine précitée assure la soudure par faisceau d'électrons tout d'abord du fourreau 11 avec le fond 16 puis par suite d'une déviation dudit faisceau, de la douille 17 avec le fond 16.

Les soudures précitées sont contrôlées par ultrasons avant assemblage du capot 18. Celui-ci est en tôle d'acier ferritique et est soumis axialement, sur un poste de soudage 38 au contact avec une face du fourreau 11, à un faisceau laser ou d'électrons qui permet d'assurer au travers de la paroi du capot la liason rigide de celui-ci avec le fourreau.

L'élément de joint homocinétique ainsi construit et contrôlé est acheminé sur un poste 40 de montage du tripode 15 et du soufflet 20.

Ainsi que cela a été représenté sur la figure 5, l'ensemble du processus est assuré automatiquement avec un personnel réduit à quelques opérateurs et à un surveillant.

Il y a lieu de noter que les principaux constituants du joint homocinétique tels que le fourreau 11 et l'entretoise 13 sont des éléments en tôle filés et/ou découpés dont l'insertion permet de réaliser une économie substantielle sur le processus de fabrication par rapport aux constituants forgés précédemments connus.

**Revendications**

1. Procédé de fabrication d'un élément composite de joint homocinétique tripode constitué par un fourreau (11) à rampes (r) de coulissement des galets (13) d'un tripode, qui est assemblé à un fond (16) susceptible d'être solidarisé avec un moyen de liaison (17) de réceptions d'un arbre menant et dont l'extrémité ouverte porte un capot (18) de retenue d'un soufflet d'étanchéité (20), selon lequel on forme le fourreau (11) à partir d'un tronçon de barre tubulaire de configuration interne à trois lobes (l) de réception des galets (13), dont les faces (f) et les rampes (r) intérieures de coulissement desdits galets (13) sont soumises à une opération de brochage avant le traitement thermique et la rectification des faces (f), poursuivie par une opération de soudure par faisceau d'électrons du fond (16) et de la liaison par soudure du capot (18), selon lequel l'opération de brochage des faces (f) du fourreau (11) qui définit les faces de référence au positionnement vertical du fourreau est suivie d'un brochage vertical intérieur des rampes (r) et qu'on procède à la suite du traitement thermique successivement à la mesure de l'écartement des rampes (r) d'un même lobe (l) à la modification de la géométrie axiale du fourreau par le passage d'une bille centrée dans ce dernier puis à la mesure du nouvel écartement qui détermine l'amplitude du déplacement d'un tripode étalon au contact des diverses rampes dans le but d'assurer une remise en forme du fourreau avant la rectification des faces (f).

2. Procédé selon la revendication 1, caractérisé par le fait que le traitement thermique par induction à moyenne fréquence est limité aux rampes du fourreau et inclut le traitement simultané de l'ensemble de ces dernières sur une profondeur de 1,5 à 2,5 mm et sur une longueur limitée à partir d'une certaine distance des faces latérales (f) dudit fourreau.

3. Procédé selon l'ensemble des revendications 1 et 2, caractérisé par le fait que le fourreau et le fond en acier fin mi-doux sont solidarisés l'un à l'autre par une soudure par faisceau radial d'électrons.

4. Procédé selon la revendication 1, caractérisé par le fait que le fond est de nuance correspondante à celle du fourreau.

5. Procédé selon l'ensemble des revendications 1 à 4, caractérisé par le fait que le capot en tôle d'acier ferritique est soumis axialement au contact avec une face du fourreau à un faisceau laser ou d'électrons visant à sa solidarisation avec le fourreau.

**Patentansprüche**

1. Herstellungsverfahren eines zusammengesetzten Elementes einer homokinetischen Tripodenkupplung, bestehend aus einer Buchse (11) mit Gleitbahnen (r) für die Rollen (13) eines Tripods, die mit einem Boden (16) versehen ist, der mit einem Verbindungsteil (17) zur Aufnahme einer antreibenden Welle verbindbar ist und deren offenes Ende einen Deckel (18) trägt zur Halterung eines Dichtbalges (20), wobei die Buchse (11) aus einem rohrförmigen Materialblock mit drei Innenbögen (I) zur Aufnahme der Rollen (13) besteht, deren Flächen (f) und deren innere Gleitbahnen (r) für die Rollen (13) einem Räumverfahren untervorfen werden vor der thermischen Behandlung und der Ausrichtung der Flächen (f), gefolgt von einem Elektronenschweißverfahren für den Boden (16) und die Schweißverbindung des Deckels (18), wobei das Räumverfahren der Flächen (f) der Buchse (11), das die Referenzflächen zur senkrechten Positionierung der Buchse festlegt, gefolgt wird von einem senkrechten inneren Räumverfahren der Gleitbahnen (r) und wobei im Anschluß an die thermische Behandlung hintereinander eine Messung erfolgt des Abstandes der Gleitbahnen eines Innenbogens (I), eine Veränderung der axialen Geometrie der Buchse mittels des Durchlaufs einer in erster zentrierter Kugel, danach eine Messung des neuen Abstandes erfolgt, der die Amplitude der Verschiebung eines Eichtripods festlegt im Kontakt mit den verschiedenen Gleitbahnen, um die Buchsenform vor der Ausrichtung der Flächen (f) festzulegen.

2. Verfahren nach Anspruch 1, dadurch gekennzeichnet, daß die thermische Behandlung mittels Induktion bei mittlerer Frequenz auf die Gleitbahnen der Buchse beschränkt ist und die gleichzeitige Behandlung von deren Gesamtheit über eine Tiefe von 1,5 bis 2,5 mm und über eine begrenzte Länge, ausgehend von einem bestimmten Abstand der seitlichen Flächen (f) der Buchsen einschließt.

3. Verfahren nach der Gesamtheit der Ansprüche 1 und 2, dadurch gekennzeichnet, daß die Buchse und der Boden aus kohlenstoffarmem Qualitätsstahl miteinander mittels einer Verschweißung mit einem radialen Elektronenstrahlbündel verbunden werden.

4. Verfahren nach Anspruch 1, dadurch gekennzeichnet, daß der Boden aus der gleichen Stahlsorte wie die Buchse besteht.

5. Verfahren nach der Gesamtheit der Ansprüche 1 bis 4, dadurch gekennzeichnet, daß der Deckel aus ferritischem Stahlblech in axialer Richtung eine Fläche der Buchse berührt und mit einem Laserstrahl oder einem Elektronenstrahl beaufschlagt wird, um ihn mit der Buchse fest zu verbinden.

**Claims**

1. A method of producing a composite element for a homokinetic tripod joint consisting of a sleeve (11) having sliding ramps (r) for the rollers (13) of a tripod and which is assembled on an end member (16) adapted to be rendered rigid with a connecting means (17) for receiving an input shaft and of which the open end carries a cap (18) for retaining a bellows seal (20), according to which the sleeve (11) is shaped from a portion of tubular bar the inner configuration of which resembles three lobes (I) for receiving rollers (13), the faces (f) and the inner sliding ramps (r) of the said rollers (13) being subjected to a broaching process prior to the heat treatment and correction of the faces (f), followed by an electron beam operation to weld the end member (16) and to connect the cap (18) by welding, according to which the operation of broaching the faces (f) of the sleeve (11) which defines the reference faces in relation to the vertical positioning of the sleeve is followed by an internal vertical broaching of the ramps (r) and according to which a heat treatment is carried out which ch follows measurement of the spacing between the ramps (r) of one and the same lobe (I) upon modification of the axial geometry of the sleeve due to a ball centred therein actually passing through the sleeve, a stage which is followed by measurement of the new spacing which determines the amplitude of the displacement of a standard tripod in contact with the various ramps in order to ensure that the sleeve is restored to shape prior to rectification of the faces (f).

2. A method according to claim 1, characterised in that the medium frequency induction heat treatment is confined to the ramps of the sleeve and includes the simultaneous treatment of all of these ramps to a depth of 1.5 to 2.5 mm and over a length which is limited to a certain distance from the lateral faces (f) of the sleeve.

3. A method according to claims 1 and 2, characterised in that the sleeve and the half-hard fine steel end member are connected to each other by a radial electron beam welding process.

4. A method according to claim 1, characterised in that the end member is of a quality which corresponds to that of the sleeve.

5. A method according to claims 1 to 4, characterised in that the ferritic steel sheet cap is axially subjected, on contact with a face of the sleeve, to a laser or electron beam intended to connect it to the sleeve.

## FIG.1

## FIG.2

FIG.3

FIG.4

17

16

11

Lavage

37

Contrôle

18

Lavage

38

Contrôle

# FIG.5